Europäisches Patentamt

European Patent Office

Office européen des brevets

(11) Publication number: **0 328 367**
**A2**

(12) **EUROPEAN PATENT APPLICATION**

(21) Application number: **89301208.8**

(22) Date of filing: **08.02.89**

(51) Int. Cl.⁴: **F 16 L 5/02**

(30) Priority: **08.02.88 GB 8802843**
**19.02.88 GB 8803909**

(43) Date of publication of application:
**16.08.89 Bulletin 89/33**

(84) Designated Contracting States:
**AT BE CH DE ES FR GB IT LI NL SE**

(71) Applicant: **N.V. RAYCHEM S.A.**
**Diestsesteenweg 692**
**B-3200 Kessel-lo (BE)**

(72) Inventor: **Pieck, Amandus**
**Hanenstraat 10**
**B-3382 Kortenaken (BE)**

**Vansant, Jan Lodewijkgh M.F.G.**
**Minneveld 2**
**B-3040 Leuven (BE)**

**Brusselmans, Jacques Hubert François**
**15 Rue Bourgemestre Dandoy**
**B-5950 Orp-Jauche (BE)**

(74) Representative: **Benson, John Everett et al**
**Raychem Limited Intellectual Property Law Department**
**Faraday Road Dorcan**
**Swindon, Wiltshire SN3 5HH (GB)**

(54) **Duct seal.**

㊼ A wrap-around duct seal having a part that extends from the duct being heat-shrinkable to seal to a cable passing therethrough. A part in the duct has opposing longitudinal edges that are bridged and sealed by an underlying flap.

Fig.1.

## Description

### Duct Seal

The present invention relates to a wraparound duct seal which can be installed in a duct around a substrate that is already in place, to provide a seal between the duct and the substrate.

One application where a seal is desirable between a duct and a substrate is where the duct is a hole in a wall or other bulkhead, and the substrate is a feedthrough. A "feedthrough" is a term well known in the art. It typically describes a hollow member which is preinstalled in a hole in the wall or bulkhead to provide a passage for later installation of cables or supply-lines through the wall.

Another application where a seal is required between a duct and a substrate is where the duct is a conduit and the substrate is a cable or supply-line passing through through the conduit.

The reason for the seal in both the above applications is to prevent water, dirt or other contaminants ingress, and heat egress.

Many existing duct seals are known in the prior art. Simple solutions include the use of wrapped tape, adhesives and mastics. More complex duct seals are also known and two are now described.

UK 1594937 (Raychem B23) describes a duct seal comprising annular, sealant-coated flanges at one end. that are defor mable by heat. The duct seal is heated and then pushed into the duct, the deformation of the flanges being made possible by the heating step. After insertion into the duct the other end of the duct seal (which is tubular, heat-shrinkable. and projects from the duct) is heated by a heat gun or torch and thereby shrinks into sealing contact with a supply line passing through the duct. The seal is made to the duct by the deformed flanges. The duct seal must therefore be made with flanges of diameter greater than that of the duct. This may hinder installation in some circumstances.

Another duct seal is described in European Patent Application 85307664.4 (Raychem B108). The exemplified embodiment there comprises a tubular sealing member in combination with a wrapped cylindrical spring biassing member positioned within the sealing member. The spring biassing member is operated after positioning of the sealing member in the duct to urge the sealing member into contact with the duct. Since the sealing is activated after positioning of the duct seal, the duct seal can be made smaller than the duct, allowing easy insertion and positioning.

The present invention provides a duct seal which embodies the features of easy insertion and positioning embodied by European Patent Application 85307664.4 (Raychem B108) in a wraparound duct seal. The wraparound nature allows the seal to be used in a duct where a substrate is already in place.

The present invention provides a wraparound duct seal for providing a seal between a duct and a substrate carried by the duct, comprising:

(a) a wraparound sealing sheet capable of being wrapped around the substrate, comprising a first, heat-stable end portion, which is positioned in use within the duct, and a second heat-shrinkable portion, which is positioned in use to project from the duct;

(b) a hollow resilient member that is positioned in use within the first heat-stable end portion of the wrapped wraparound sheet and operated after installation of the wrapped sheet in the duct to deform the wrapped sheet outwards and thereby provide a resilient biased engagement between the wrapped sheet and the duct; and

(c) a sealing strip, which is secured to and/or overlaps one of the longitudinal edges of at least the first end-portion of the deformed wrapped sheet, and overlaps the other of the longitudinal edges of at least the first end-portion of the deformed wrapped sheet.

When the hollow resilient member is operated it deforms the first end of the wrapped sheet outwards to engage the duct. During this operation the first end of the wrapped sheet may tend to unwrap. The sealing strip overlaps any gap that might otherwise form between longitudinally opposed edges of the wrapped sheet as it is deformed.

The sealing strip may be a discrete member separate from the wrapped sheet, or it may be integrally formed or secured to one longitudinal edge of the wrapped sheet.

The sealing strip may be positioned inside or outside the wrapped sheet. In both cases it is arranged to overlap the longitudinal edges of the wrapped sheet (either inside or outside the sheet). When the biassing member is operated the sealing strip is forced into sealing contact with the wrapped sheet. Where the sealing strip is inside the wrapped sheet it is compressed between the biassing member and the wrapped sheet. Where the sealing strip is outside the wrapped sheet it is compressed between the wrapped sheet and the duct. In both configurations the compression of the sealing strip against the wrapped sheet ensures that there is no leak path between the longitudinally opposed edges of the wrapped sheet. It is this unique combination of (1) a wrapped sleeve, (2) an overlapping compressed sealing strip and (3) a biassing means (which provides the compression) which enables an easily installable, and useful, wraparound duct seal with good sealing against ingress from contaminants to be made.

Where the sealing strip is integral with or secured to one longitudinal edge of the wrapped sheet it provides a large overlap of the wrapped sheet which decreases in width if the sheet starts to unwrap during installation. This overlap portion may be positioned on the inside or the outside.

The sealing strip extends at least along the first portion of the wrapped sheet. It may extend along the first and second portions.

The wraparound sealing sheet comprises a first portion (which lies within the duct) and a second portion (which projects from the duct). The second portion is heat-shrinkable and is for sealing to a substrate passing through the duct. Preferably this second portion, but not the first portion, is provided with a closure means. Closure means for closing wraparound heat-recoverable articles are known in the field and any of these known closure means, as appropriate, may be used. As examples there may be mentioned a rail and channel closure as described for example in US 345536 (Ellis) and EP 0116392 (RK 178 EPC), and a zipper closure.

The closure member preferably extends only along the second portion of the duct seal. The first portion (which in use is inside the duct) preferably has no closure. The reason for a closure is to seal against contaminants ingress. In the first portion of the duct seal, this seal is provided (on installation) by compression of the sealing strip against the wrapped sheet, by action of the biassing member. Thus a closure is not required for the first portion. Indeed, it is preferred that a closure is not used for the first portion since its bulk might impair the seal.

Where a closure is provided on the second shrinkable end portion of the wrapped sheet a sealing flap is preferably provided under the closure. The sealing flap may be integral with the wrapped sheet or separately formed. This sealing flap is to be distinguished from the sealing strip mentioned before. The function of the newly mentioned sealing flap is to seal below any closure means on the second heat-shrinkable portion of the wrapped sleeve which projects from the duct. The function of the earlier mentioned sealing strip is to overlap and ensure there is a seal around the entire circumference of the first portion of the sleeve. This first portion (1) is within the duct and (2) preferably does not comprise closure means. Thus, the sealing strip and the sealing flap must be distinguished at least in function. They may, however, be formed either separately or integrally.

The sealing strip is preferably coated with adhesive or sealant, on one or both surfaces. Similarly, where a sealing flap is used under a closure on the second shrinkable end portion of the wrapped sheet this is preferably coated with adhesive or sealant.

The wrapped sheet and/or the sealing strip may be provided with self contained heating means. These heating means may be arranged to heat all or part of the article. For example they may heat the first end portion of the wrapped sheet to soften it to facilitate deformation by the biassing member. They may heat the second end portion of the wrapped sheet to recover it. They may heat to activate an adhesive coating.

Where the first end portion of the wrapped sheet needs to be heated to soften it to allow its deformation, it is particularly preferred to use self contained heating means which can be activated after the wrapped sheet is inside the duct.

The self contained heating means may be integral with the article or fixed thereto. As an example a wire heater or a conductive polymeric strip heater may be fixed to the wrapped sheet and heated electrically. As another example the wrapped sheet may itself comprise conductive polymeric material, and the sheet electroded to pass electrical current through the sheet. Particularly preferred compositions and electrode configurations described in British Patent Application 8729123 (RK365) and 8729120 (DK005 GB3).

Instead of self contained heating means an external source of heat may be used.

The wrapped sheet may be made in one or several parts. The first end portion which is heat stable and the second end portion which is heat recoverable may be made integrally or separately. Where they are made separately the parts may be joined in any suitable way.

In one embodiment the wrapped sheet comprises polymeric material, for example a polyolefin such as polyethylene. In this case one end only (the second end) can be made recoverable by expanding only that end.

In another embodiment the wrapped sheet comprises a conductive polymeric material as described above. in this case recovery of the second end only of the wrapped sheet may be provided by appropriate positioning of the electrodes.

In another embodiment the wrapped sheet comprises a heat recoverable fabric. A suitable fabric is described in European Patent Application 84300059.7 (MP790). The fabric preferably comprises heat recoverable fibres extending around the circumference of the article at the second end only of the article. The fabric is preferably laminated with polymeric material on one or both surfaces for sealing.

Where the wrapped sheet is a fabric the part may be made integrally with heat shrinkable fibres at one end only (the second end), or two fabrics (only one of which contains heat shrinkable fibre) may be joined together. Fabrics can conveniently be joined by stitching.

Embodiments of the present invention will now be described, by way of example, with reference to the accompanying drawings, wherein:

Figure 1 is a side view of a duct seal according to the invention installed in a duct;

Figure 2 is a perspective view of the duct seal of Figure 1; and

Figure 3 is a perspective view of another duct seal according to the invention.

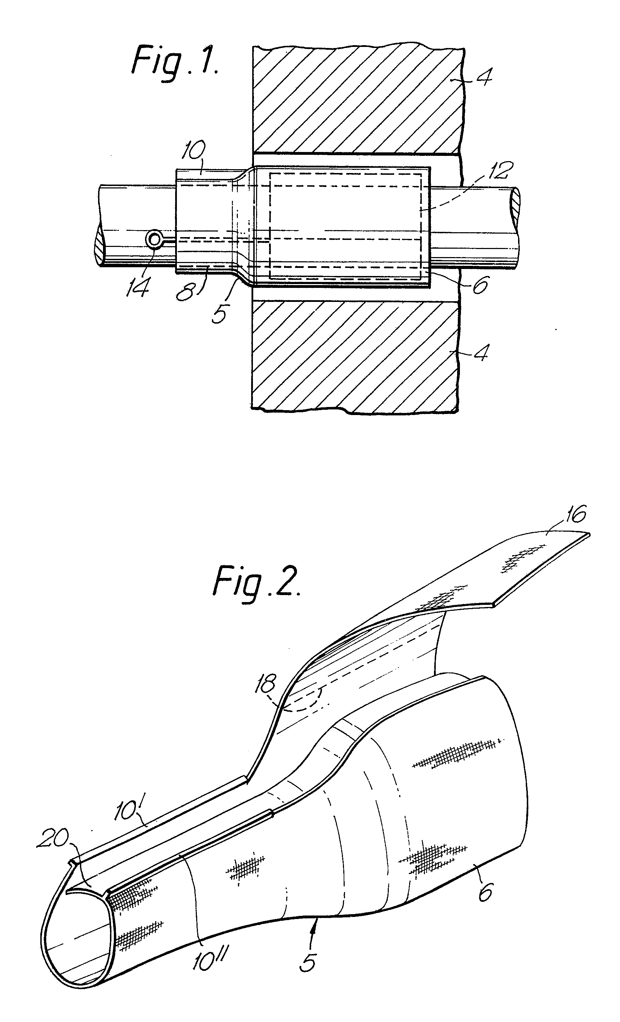

Referring to the drawings, Figure 1 shows a duct seal 2 installed in a duct in wall 4. The major component of the duct seal 2 is a wrapped sheet 5 which has first heat stable end portion 6, which is positioned inside the duct, and a second heat-shrinkable end portion 8, which projects from the duct. The second end portion 8 is provided with a closure 10. (The wrapped ends of the sheet are now shown for clarity).

Inside the first end portion 6 is a biassing spring in the form of a split cylinder 12. This can be operated externally of the duct by trigger 14, as described in European Patent Application 85307664.4. When the spring is activated it springs outward deforming the wrapped sheet into sealing contact with the duct.

Figure 2 is an enlarged perspective view of the duct seal. A sealing strip 16 is integrally formed with the wrapped sheet 5. An artificial division between sealing strip 16 and wrapped sheet 5 is shown by dotted line 18. Both ends of the wrapped sheet 5 are integrally formed from fabric. The fabric is laminated with polymeric material for sealing. Heat recoverable, second end portion 8 comprises heat shrinkable fibres extending around the circumference and heat stable fibres extending along the length. First end portion 6 comprises heat stable fibres in both directions. The closure 10 along the second end portion is provided by interlocking zipper members 10′, 10″. One of the zipper members 10″ is spaced from the longitudinal edge of the end portion 8 to provide an elongate sealing flap 20 extending beneath the closure 10. The sealing flap also extends beneath the first end portion 6 of the wrapped sheet 5, which is preferred.

When the wrapped sheet 5 is positioned in the duct the sealing strip 16 provides a large overlap on the outside of the wrapped sheet. When the biassing spring 12 is activated the wrapped sheet may tend to uncurl decreasing the width of the overlap. The large overlap provided by sealing strip 16 ensures no gap occurs around the circumference of end portion 6. Also as the biassing member 12 is activated the sealing strip 16 is compressed between the inside wall of the duct and the outside of the end portion 6 of the wrapped sheet. This ensures that no contaminants can exit the duct, and the seal is good.

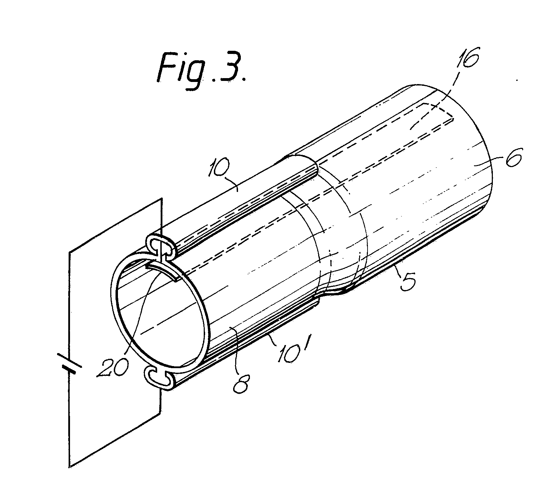

Figure 3 shows an alternative embodiment of duct seal. In this case the wrapped sheet 5 comprises conductive polymeric material as described in GB 8729123 (RK365) and 8729120 (DK005 GB3). The second shrinkable end 8 only is electroded through its rail and channel closure 10 at the opening of the sleeve, and by a second electrode 10′ provided on dummy rails on the opposite, closed side of the sleeve. The sealing strip under the edges of end portion 6 and the sealing flap 20 under the closure of end portion 8 are integrally formed. As in the embodiment of Figure 1 the sealing strip 16 is compressed on activation of the biassing member 12. In this case it is compressed between the biassing member and the end portion. In this case a support (not shown) is preferably provided beneath the sealing flap 20.

**Claims**

1. A wraparound duct seal for providing a seal between a duct and substrate carried by the duct, comprising:

(i) a wraparound sealing sheet capable of being wrapped around the substrate, comprising a first, heat-stable end portion, which is positioned in use within the duct, and a second heat-shrinkable portion, which is positioned in use to project from the duct;

(ii) a hollow resilient member that is positioned in use within the first heat-stable end portion of the wrapped wraparound sheet and operated after installation of the wrapped sheet outwards and thereby provide a resilient biased engagement between the wrapped sheet and the duct; and

(iii) a sealing strip, which is secured to and/or overlaps one of the longitudinal edges of at least the first end-portion of the deformed wrapped sheetk and overlaps the other of the longitudinal edges of at least the first end-portion of the deformed wrapped sheet.

2. A duct seal according to claim 1, wherein the sealing strip lies inside the wrapped sheet.

3. A duct seal according to claim 1, wherein the sealing strip lies outside the wrapped sheet.

4. A duct seal according to claim 1, 2 or 3, wherein the second end portion of the wrapped sheet is provided with a closure which extends only along the second end portion.

5. A duct seal according to any preceding claim, wherein the second end portion of the wrapped sheet comprises a reco verable fabric.

6. A duct seal according to any proceding claim, which comprises a conductive polymeric material.

Fig.1.

Fig.2.

Fig .3.